# EUROPEAN PATENT SPECIFICATION

(11) **EP 2 009 993 B1**
(45) Date of publication and mention of the grant of the patent: **22.07.2015**
(21) Application number: 07742566.8
(22) Date of filing: 20.04.2007
(51) Int. Cl.: A01N 63/00, A01P 15/00, A01N 31/02

(54) **COMPOSITION OF BIOFILM CONTROL AGENT**
ZUSAMMENSETZUNG EINES MITTELS FÜR DIE BIOFILMBEKÄMPFUNG
COMPOSITION D'AGENT DE LUTTE CONTRE UN BIOFILM

(30) Priority: 21.04.2006 JP 2006117911; 30.11.2006 JP 2006323884; 30.11.2006 JP 2006324180
(43) Date of publication of application: 07.01.2009
(73) Proprietor: Kao Corporation, Chuo-ku Tokyo 103-8210 (JP)
(72) Inventor: ISOBE, Kazuo, Wakayama-shi, Wakayama 640-8580 (JP); OKANO, Tetsuya, Wakayama-shi, Wakayama 640-8580 (JP); IWASAKI, Shinya, Wakayama-shi, Wakayama 640-8580 (JP); OKAUCHI, Yuji, Wakayama-shi, Wakayama 640-8580 (JP)
(74) Representative: Hoffmann Eitle
(86) International application number: PCT/JP2007/059131
(87) International publication number: WO 2007/123271

(56) References cited:
- WO-A-96/17632
- WO-A-97/30148
- WO-A-2004/041990
- WO-A1-03/022752
- FR-A1- 2 818 150
- US-A- 3 931 034
- US-A- 4 201 686
- US-A- 4 657 855
- US-A- 4 692 260
- US-A1- 2005 256 016

## Description

### [Field of the Invention]

The present invention relates to a composition of a biofilm control agent. More specifically, the present invention relates to a composition of a biofilm control agent for suppressing biofilm formation, promoting the removal of a biofilm, and preventing the hazard attributed to a biofilm in various fields in which microorganisms have an involvement.

### [Background of the Invention]

Biofilms, which are also called slimes, generally refer to structures composed of polymer substances such as polysaccharides and proteins produced from cells of microorganisms adhering and proliferating on the surface of a substance in an aqueous system. Biofilm formation causes hazard attributed to microorganisms and thus causes problems in various industrial fields. For example, biofilms formed within the pipes of a food processing plant peel off are not only lead to contamination into products but also cause food borne disease attributed to toxic derived from the microorganisms. Furthermore, biofilm formation on a metal surface causes corrosion of the metal and promotes the aging of facilities.

Furthermore, microorganism control drugs such as bactericides and bacteriostatic agents hardly exhibit sufficient effects on the community of microorganisms forming biofilms as compared with microorganisms dispersed and suspended in an aqueous system. For example, from a medical viewpoint, many reports have said in recent years that microorganisms remaining in narrow gaps or holes in medical devices form biofilms and thereby cause in-hospital infections. It has been well known that biofilms formed on teeth, that is, so-called dental plaque (sordes on teeth), cause caries and periodontal diseases in human oral cavities. Studies have been conducted for a long time on these problems.

An idea that microorganisms, particularly bacteria, are prevented from proliferating by giving bactericidal or bacteriostatic actions thereon has generally been investigated so far for suppressing biofilms. Patent Documents 1 and 2 have disclosed that use of fatty acid, aliphatic alcohol, or the like decreases bacterial counts and can consequently prevent adherence of the bacteria to a substance of interest. Particularly, in Patent Document 1, a composition in an emulsion form prepared from an antimicrobial oil phase and an emulsifier exhibits the effect of decreasing bacterial counts in a relatively short time. This indicates an idea that the adherence of bacteria onto the surface of a substance of interest is suppressed based on reduction in absolute bacterial counts per unit volume. Furthermore, Patent Document 3 has disclosed, for example, a toothpaste composition containing a nonaqueous active component such as an antiphlogistic dissolved in an oil substance.

On the other hand, studies have also been conducted on a method not for killing microorganisms but for removing a formed biofilm. An attempt has been made to remove a biofilm by use of an enzyme. Patent Document 4 has disclosed the use of a variety of enzymes. Patent Document 5 has disclosed use of a protease. Patent Document 6 has disclosed a combined use of an enzyme (lipase) with a surfactant.

In Patent Document 1 or 2, bactericidal properties (which reduces bacterial counts by approximately 4th power) on microorganisms have been evaluated in a relatively short time within 60 minutes. However, the biofilm problem occurs on a long-term basis from several days to several months. Thus, it is actually difficult to connect the short-term evaluation of bactericidal properties with the suppression of biofilm formation. The fatty acid or aliphatic alcohol described as the antimicrobial oil phase has sufficient bactericidal effects not on all microorganisms (bacteria) and does not have a Minimal Inhibitory Concentration (MIC) serving as an index of long-term bactericidal effects, particularly on Gram-negative bacteria that often present biofilm formation problems (see Non-Patent Document 1). Furthermore, experiments conducted by the present inventors have demonstrated that although the compositions described in Patent Documents 1 and 2 exhibit short-term (up to approximately 3 hours) bactericidal effects on *Pseudomonas aeruginosa* and *Serratia* bacteria among Gram-negative bacteria as described therein, they do not exhibit, let alone bactericidal properties, even bacteriostatic effects of suppressing bacterial proliferation on a long-term basis (1 day or longer), resulting in biofilm formation.

In addition, highly bactericidal drugs characterized by fast-acting properties, such as highly bactericidal cationic surfactants and hypochlorite, have also been known. However, their bactericidal properties are lost in the presence of an organic substance in a system. Therefore, it is difficult to maintain the effect of decreasing bacterial counts over a long term, as described above.

For these reasons, it is difficult to radically suppress the biofilm formation of bacteria from a bactericidal or bacteriostatic viewpoint.

Biofilms are composed of various substances such as bacterial cells, polysaccharides, and proteins, as described above. It may be difficult to completely remove biofilms by degrading only a portion of these compounds. In the method for removing a biofilm by use of an enzyme, removing effects are observed to some extent. However, it is difficult to completely remove a biofilm by the method, and the method does not have the effect of suppressing biofilm formation. Therefore, microorganisms in remaining biofilms proliferate again and produce polymer substances such as polysaccharides and proteins.

Specifically, it was also difficult to effectively control biofilms from the viewpoint of removing biofilms.
(Patent Document 1) JP-A-2002-524257 (WO 00/15562)
(Patent Document 2) JP-A-2004-513153 (WO 02/38181)
(Patent Document 3) JP-A-2005-289917
(Patent Document 4) JP-A-2001-508677 (WO 98/26807)
(Patent Document 5) JP-A-6-262165
(Patent Document 6) U.S. Patent No. 6699391
(Non-Patent Document 1) Cosmetic and Drug

Preservation: Principles and Practice; John. J. Kavala, Fragrance Journal, 1990

WO 03/022752 discloses the reduction of biofilms using enzymes and surfactants, e.g. ethoxylated alcohols.

### [Disclosure of the Invention]

The present invention provides the use of a composition as a biofilm control agent, the composition containing the following component (A) and component (B) :
(A) one or more compounds represented by the general formula (1):
   [F1]

   R¹O-(EO)ₚ-H (1)

   wherein R1 represents a linear or branched alkyl group or alkenyl group having 8 to 14 carbon atoms; EO represents an ethyleneoxy group; p represents an integer of 0 to 3 and
(B) one or more enzymes selected from the group consisting of hydrase and lyase.

The present invention also provides a method for suppressing biofilm formation by bringing this composition of a biofilm control agent into contact with a microorganism and for removing an already-formed biofilm.

### [Mode for Carrying Out the Invention]

The present invention provides a method for suppressing biofilm formation, and use of the composition as a biofilm control agent.

According to the present invention, the component (A) and the enzyme can radically suppress biofilm formation and effectively remove a biofilm. As a result, the present invention can effectively prevent the adherence of a biofilm onto the surface of an object of interest over a long term.

In a compound used as a component (A) in the present invention represented by the general formula (1):

R¹O-(EO)p-H (1),

R¹ represents a linear or branched alkyl group or alkenyl group having 8 to 14 carbon atoms and is preferably an alkyl group or alkenyl group, more preferably alkyl group, having 10 to 12 carbon atoms. The number p of an ethyleneoxy group represented by EO is 0 to 3, preferably 0 to 2, more preferably 0. When the number p of the ethyleneoxy group represented by EO exceeds 3, the effect of suppressing biofilm formation and the effect of removing a biofilm are rendered insufficient.

The concentration by weight of the component (A) may be 1 ppm or more in the system of action of a biofilm control agent and is preferably 1 to 10,000 ppm, more preferably 5 to 2,000 ppm, even more preferably 10 to 1,000 ppm, from the viewpoint of cost efficiency and its effects.

A component (B) used in the present invention is one or more enzymes selected from hydrase (hydrolytic enzyme) and lyase (isomerizing enzyme).

Examples of the hydrase (hydrolytic enzyme) include: carbohydrate-degrading enzymes such as amylase, cellulase, dextranase, glucanase, glucosidase, galactosidase, mannosidase, agarase, lactase, mutanase, lysozyme, chitinase, and chitosanase; proteolytic enzymes such as pepsin, trypsin, chymotrypsin, collagenase, gelatinase, keratinase, elastase, subtilisin, papain, bromelin, carboxypeptidase, aminopeptidase, thermolysin, and Achromopeptidase; and lipid-degrading enzymes such as lipases, cutinase, and phospholipase.

Examples of the lyase (isomerizing enzyme) include alginate lyase, aldolase, and serine dehydratase.

The component (B) is preferably preferably proteolytic enzymes, glucanase, or alginate lyase.

The concentration by weight of the enzyme as a component (B) is not particularly limited and may be selected appropriately according to the type thereof. The concentration is 0.01 to 20,000 ppm, preferably 0.1 to 2,000 ppm, more preferably 1 to 200 ppm in the system of action of a biofilm control agent from the viewpoint of cost efficiency and its effects.

Of the components (A) of the present invention, particularly those highly hydrophobic and low water-soluble are allowed to stably exist in an aqueous system using a surfactant (hereinafter, also referred to as a component (C)). As a result, the obtained agent of the present invention can be utilized more effectively in an aqueous system. In this context, the phrase "stably exist in an aqueous system" refers to a state in which the component (A) that is highly hydrophobic is emulsified, dispersed, and solubilized without separation over a long term and means that a larger amount of the component (A) can be emulsified, dispersed, and solubilized per unit volume of the aqueous system.

The surfactant that can be utilized in the present invention is not particularly limited by type. It is desirable to use a surfactant that can allow the component (A) to stably exist in an aqueous system and does not denature the enzyme as a component (B). Among surfactants, anionic surfactants, nonionic surfactants other than the component (A), or amphoteric surfactants are preferably used from the viewpoint of their performances for emulsifying, dispersing, and solubilizing the component (A).

Example of the anionic surfactants include lignin sulfonate, alkylbenzene sulfonate, alkyl sulfonate, polyoxyethylene (hereinafter, referred to as POE) alkyl sulfonate, POE alkylphenyl ether sulfonate, POE alkylphenyl ether phosphoric ester salts, POE arylphenyl ether sulfonate, alkyl sulfuric ester salts, POE alkyl sulfuric ester salts, POE arylphenyl ether phosphoric ester salts, naphthalenesulfonate, formalin condensates of naphthalenesulfonic acid, POE tribenzylphenyl ether sulfonate, alkyl phosphate, POE alkyl phosphate, POE tribenzylphenyl ether phosphoric ester salts, dialkyl sulfosuccinate, salts of fatty acid (soap), and POE alkyl ether acetate. Among them, alkyl sulfuric ester salts, POE alkyl sulfuric ester salts, or POE alkyl ether acetate are more preferably used.

Examples of the nonionic surfactants include: monohydric alcohol derivative-based nonionic surfactants such as POE alkyl ether other than the component (A), POE alkylphenyl ether, polyoxypropylene-POE (block or random) alkyl ether, POE arylphenyl ether, POE styrenated phenyl ether, and POE tribenzylphenyl ether; and polyhydric alcohol derivative-based nonionic surfactants such as poly(glycerin) fatty acid ester, sucrose fatty acid ester, sorbitan fatty acid ester, POE sorbitan fatty acid ester, alkyl polyglycoside, and fatty acid alkanolamide. Among them, POE alkyl ether other than the component (A), (poly)glycerin fatty acid ester, alkyl polyglycoside, sorbitan fatty acid ester, or POE sorbitan fatty acid ester is more preferably used.

Examples of the amphoteric surfactants include carboxybetaine, sulfobetaine, fatty acid amide betaine, and amine oxide. Among them, amine oxide is preferably used.

The surfactants can be used alone or can be used in combination of two or more kinds thereof for enhancing their emulsifying, dispersing, and solubilizing performances.

The weight ratio (A) / (B) of the component (A) and the component (B) in the composition of a biofilm control agent is preferably 1,000,000/1 to 1/20,000, more preferably 10,000/1 to 1/1,000, even more preferably 1,000/1 to 1/100, even more preferably 100/1 to 1/10.

The composition of a biofilm control agent contains preferably 0.005 to 10% by weight, more preferably 0.05 to 5% by weight, even more preferably 0.5 to 3% by weight of the component (A), and preferably 0.0001 to 10% by weight, more preferably 0.001 to 5% by weight, even more preferably 0.01 to 2% by weight of the component (B). Moreover, the composition of a biofilm control agent contains preferably 0.01 to 50% by weight, more preferably 0.1 to 20% by weight of the surfactant (C).

The weight ratio (A)/(C) of active contents of the component (A) and the component (C) in the composition of a biofilm control agent is preferably 10/1 to 1/100, more preferably 5/1 to 1/50, even more preferably 2/1 to 1/50, even more preferably 1/1 to 1/20.

A method for adding the components (A) and (B) into the system of action of the composition of a biofilm control agent for use in the present invention may be performed by separately adding the component (A) and the component (B) at the concentrations described above or by preparing a composition formulated in advance with the component (A) and the component (B) and adding the composition into the system. Alternatively, a derivative produced with the compound of the general formula (1), (2), (3), or (4) as a raw material may be added into the system to thereby produce the component (A) through reaction such as hydrolysis in the system.

The composition formulated in advance with the component (A) and the component (B) of the composiltion used in the present invention may assume various forms such as liquids, pastes, powders, and tablets according to application thereof. The composition of a biofilm control agent may be a one-agent type in which all the components are mixed or may be divided into several packages according to usability.

When the composition of a biofilm control agent is prepared in advance as a high-concentration liquid composition with water as a solvent, an enzyme stabilizer (hereinafter, also referred to as a component (D)) can be used for the purpose of preventing the enzyme as a component (B) from being inactivated during storage and maintaining its effects. Examples of the enzyme stabilizer include: boric acid compounds such as boric acid or salts thereof and borax; polyols such as ethylene glycol, propylene glycol, glycerin, erythritol, xylitol, and sorbitol; short-chain carbonyl compounds such as formic acid or salts thereof and acetic acid or salts thereof; and water-soluble calcium compounds such as calcium acetate, calcium chloride, and calcium gluconate. One or more kinds of these enzyme stabilizers can be selected and used. Among them, preferably boric acid or salts thereof, polyols, formic acid or salts thereof, and water-soluble calcium compounds, more preferably boric acid or salts thereof and polyols are used. More preferably, boric acid or salts thereof and polyol are combined for use.

The component (D) is contained at preferably 0.01 to 20% by weight, more preferably 0.1 to 15% by weight, in the composition of a biofilm control agent.

The composition of a biofilm control agent used in the present invention suppresses the formation of a biofilm composed of bacterial cells and polymer substances produced by the bacteria and removes an already-formed biofilm adhering onto the surface of an object of interest. The composition of a biofilm control agent is an agent that controls the adherence of a biofilm on the surface of an object of interest by simultaneously exerting these effects and performs cleaning or maintains cleanliness. Thus, the composition of a biofilm control agent does not kill bacteria themselves. The composition of a biofilm control agent may be used in combination with a bactericide or antimicrobial agent for the purpose of killing bacteria. In general, biofilm formation renders a bactericide less effective. However, the composition of the present invention suppresses biofilm formation and removes a biofilm. As a result, the efficacy of the bactericide can be exploited sufficiently.

The bactericide usable in the present invention is not particularly limited. However, a bactericide that denatures and inactivates the enzyme as a component (B) is not preferable. For example, chlorhexidine gluconate, triclosan, triclocarban, isopropyl methylphenol, or alkyldiaminoethylglycine hydrochloride can be used preferably. After the composition of a biofilm control agent of the present invention acts, any bactericide can be used effectively without their bactericidal effects inhibited by a biofilm.

The composition of a biofilm control agent used in the present invention may be supplemented with a component improving cleaning properties for the purpose of cleaning organic pollution other than biofilms, such as proteins, starch, fat and oil, and water stains, and inorganic pollution such as dirt and scales, so long as the object of the present invention is not impaired. Examples thereof include alkali agents, alkali builders, chelating agents, and dispersants. Examples of the alkali agents include sodium hydroxide, potassium hydroxide, monoethanolamine, and diethanolamine. Examples of the alkali builders include sodium carbonate, potassium carbonate, sodium silicate, and potassium silicate. Examples of the chelating agents include: aminocarboxylic acid derivatives such as nitrilotriacetate, ethylenediaminetetraacetate, iminodisuccinate, aspartic acid diacetate, and aminomethylglycine diacetate; polyelectrolyte-based compounds such as polyacrylic acid and/or salts thereof, polyacrylic acid-maleic acid copolymers and/or salts thereof; phosphoric acid-based compounds such as tripolyphosphate, orthophosphate, and pyrophosphate; phosphonic acid-based compounds such as 1-hydroxyethane-1,1-diphosphonic acid and/or salts thereof, aminotri(methylenephosphonic acid) and/or salts thereof, and ethylenediaminetetra(methylenephosphonic acid) and/or salts thereof; and aluminosilicic acid such as A-type zeolite and B-type zeolite. Additional components that may be added to the composition include phyllosilicate, citric acid and/or salts thereof, aspartic acid and/or salts thereof, and glutamic acid and/or salts thereof.

The composition used in the present invention can further be supplemented with thickeners, viscosity modifiers, solvents, flavors, coloring agents, antioxidants, antiseptics, fluorescence agents, excipients, soil release agents, bleaching agents, bleach activators, powderizing agents, granulating agents, coating agents, and so on, so long as the object of the present invention is not impaired.

Preferably, the composition of a biofilm control agent used in the present invention is used at a pH in the range of 2 to 12, preferably 4 to 11, more preferably 5 to 11.

The composition of a biofilm control agent used in the present invention is effectively used as a water diluent in an aqueous system. This water diluent of the composition of a biofilm control agent is brought into contact with an object of interest for use. When the composition of a biofilm control agent of the present invention is used, a biofilm can be removed from the object of interest without physical forces such as wiping, brushing, and water flow. However, these physical forces may be used in combination with the composition for removing a biofilm in a short time. For an extensive object of interest, a mist of the composition may be sprayed thereonto by use of a spraying apparatus, or foam of the composition produced by use of a foaming apparatus may be sprayed thereonto. Alternatively, the water diluent of the composition may be allowed to flow onto the object of interest or may be applied to the object of interest with a brush or the like. In addition, the water diluent may be infiltrated into a towel or the like, with which the surface of the object of interest is wiped. The water diluent of the composition may also be attached or applied to the surface on which microorganisms possibly exist, as long as the conditions of bringing the composition into contact with the microorganism are satisfied. The water diluent of the composition is preferably used at a component (A) concentration by weight of 1 to 10,000 ppm.

Depending on the type of an object of interest, the composition is not used in a water diluent system and may be applied and spread in the form of a cream or ointment over the object of interest. In this case, the component (A) is provided in a form dissolved, dispersed, and emulsified in an appropriate solvent and preferably used at a concentration by weight of 1 to 10,000 ppm.

The present invention also provides a method for suppressing biofilm formation by bringing the composition of a biofilm control agent into contact with microorganisms and for removing an already-formed biofilm. In this context, preferably, the contact between the composition of a biofilm control agent and the microorganism is performed continuously.

The product used in the present invention can be used in wide fields that are likely to be susceptible to hazard by a biofilm. The product can be applied, for example, to cleaning agents for food manufacturing or drink manufacturing plants at high risk of bacterial contamination and to drainage ditches or drainage pipes in kitchens. Moreover, the product can be applied to cooling aqueous systems such as industrial cooling towers, desalting apparatuses, pulp and paper manufacture systems, and circulating aqueous-system channels such as baths, pools, and artificial ponds. It can also be applied to cleaning agents for medical devices susceptible to biofilm formation, for example, endoscopes, catheters, and dialyzing machines. Furthermore, the product is highly safe and as such, may be used for cleaning agents, toothpastes, mouth care agents, denture care agents, and contact lens cleansers intended for humans.

### Examples

Example 1: Formulation of composition of biofilm control agent and test for ability to suppress biofilm formation Component (A) R¹O-(EO)ₚ-H
(A-1) C8 alcohol (KALCOL 0898, manufactured by KAO Corp., R¹=C8 alkyl, p=0)
(A-2) C10 alcohol (KALCOL 1098, manufactured by KAO Corp., R¹=C10 alkyl, p=0)
(A-3) C12 alcohol (KALCOL 2098, manufactured by KAO Corp., R¹=C12 alkyl, p=0)
(A-4) C14 alcohol (KALCOL 4098, manufactured by KAO Corp., R¹=C14 alkyl, p=0)
(A-5) 3 mole ethylene oxide adduct of C10 alcohol (NIKKOL BD-3SY, manufactured by Nikko Chemicals Co., Ltd., R¹=C10 alkyl, p=3)
(A-6) 1 mole ethylene oxide adduct of C12 alcohol (NIKKOL BL-1SY, manufactured by Nikko Chemicals Co., Ltd., R¹=C12 alkyl, p=1)
(A-7) 2 mole ethylene oxide adduct of C12 alcohol (NIKKOL BL-2SY, manufactured by Nikko Chemicals Co., Ltd., R¹=C12 alkyl, p=2)
(A-8) 3 mole ethylene oxide adduct of C12 alcohol (NIKKOL BL-3SY, manufactured by Nikko Chemicals Co., Ltd., R¹=C12 alkyl, p=3)
(A-9) C12 alcohol (trans-2-dodecene-1-ol, manufactured by Wako Pure Chemical Industries, Ltd., R¹=C12 alkenyl, p=0)
(A-10) C12 alcohol (secondary) (2-dodecanol, Wako Pure Chemical Industries, Ltd., R¹=C12 alkyl, p=0)
(A-11) C12 alcohol (2-butyl-1-octanol, manufactured by Sigma-Aldrich Inc., R¹=C12 branched alkyl, p=0)

Component (A') R^{1'}O-(EO)p-H
(A'-1) C1 alcohol (methanol, manufactured by Wako Pure Chemical Industries, Ltd., R^{1'}=C1 alkyl, p=0)
(A'-2) C2 alcohol (ethanol, manufactured by Wako Pure Chemical Industries, Ltd., R^{1'}=C2 alkyl, p=0)
(A'-3) C3 alcohol (1-propanol, manufactured by Wako Pure Chemical Industries, Ltd., R^{1'}=C3 alkyl, p=0)
(A'-4) C4 alcohol (1-butanol, manufactured by Wako Pure Chemical Industries, Ltd., R^{1'}=C4 alkyl, p=0)
(A'-5) C16 alcohol (KALCOL 6098, manufactured by KAO Corp., R^{1'}=C16 alkyl, p=0)
(A'-6) C18 alcohol (KALCOL 8098, manufactured by KAO Corp., R^{1'}=C18 alkyl, p=0)
(A'-7) 1 mole ethylene oxide adduct of C1 alcohol (2-methoxyethanol, manufactured by Wako Pure Chemical Industries, Ltd., R^{1'}=C1 alkyl, p=1)
(A'-8) 2 mole ethylene oxide adduct of C1 alcohol (2-(2-methoxyethoxy)ethanol, manufactured by Wako Pure Chemical Industries, Ltd., R^{1'}=C1 alkyl, p=2)
(A'-9) 1 mole ethylene oxide adduct of C2 alcohol (2-ethoxyethanol, manufactured by Wako Pure Chemical Industries, Ltd., R^{1'}=C2 alkyl, p=1)
(A'-10) 2 mole ethylene oxide adduct of C2 alcohol (2-(2-ethoxyethoxy)ethanol, manufactured by Wako Pure Chemical Industries, Ltd., R^{1'}=C2 alkyl, p=2)
(A'-11) 1 mole ethylene oxide adduct of C4 alcohol (2-butoxyethanol, manufactured by Wako Pure Chemical Industries, Ltd., R^{1'}=C4 alkyl, p=1)
(A'-12) 2 mole ethylene oxide adduct of C4 alcohol (2-(2-butoxyethoxy)ethanol, manufactured by Wako Pure Chemical Industries, Ltd., R^{1'}=C4 alkyl, p=2)
(A'-13) C20 alcohol (2-octyl-1-dodecanol, manufactured by Sigma-Aldrich Inc., R^{1'}=C20 branched alkyl, p=0)
(A'-14) average 6 mole ethylene oxide adduct of C12 alcohol (EMULGEN 108, manufactured by KAO Corp., R^{1'}=C12 alkyl, p=6 (on average))
(A'-15) average 9 mole ethylene oxide adduct of C12 alcohol (EMULGEN 109, manufactured by KAO Corp., R^{1'}=C12 alkyl, p=9 (on average))

Component (B) enzyme
(B-1) proteolytic enzyme (Alcalase 2.5L, Type DX, manufactured by Novozymes)
(B-2) proteolytic enzyme (Savinase 16L, Type EX, manufactured by Novozymes)
(B-3) mixture of glucanase and proteolytic enzyme (Tunicase FN, manufactured by Daiwa Kasei K.K.)
(B-4) alginate lyase (Alginate Lyase S, manufactured by Nagase Chemtex Corp.)
(B-5) dextranase (Dextranase L "Amano", manufactured by Amano Enzyme Inc.)
(B-6) amylase (Duramyl, manufactured by Novozymes)

Component (C) surfactant (numerals in parentheses () represent the average number of added moles of ethylene oxide)

### <Anionic surfactant>

(C-1) sodium lauryl sulfate (EMAL 0, manufactured by KAO Corp.)
(C-2) sodium polyoxyethylene (2) lauryl ether sulfate (EMAL 20C, manufactured by KAO Corp.)

### <Nonionic surfactant>

(C-3) polyoxyethylene (12) lauryl ether (EMULGEN 120, manufactured by KAO Corp.)
(C-4) lauryl glucoside (MYDOL 12, manufactured by KAO Corp.)
(C-5) polyoxyethylene (20) sorbitan monolaurate (RHEODOL TW-L120, manufactured by KAO Corp.)

### <Amphoteric surfactant>

(C-6) lauryldimethylamine oxide (AMPHITOL 20N, manufactured by KAO Corp.)

A component (A) or (A') concentration was fixed to 1% by weight (active content). A component (B) concentration was set to 1% by weight (apparent). A component (C) concentration was selected from 1, 3, 6, and 10% by weight (active content). The remaining part was formulated with ion-exchanged water to prepare a formulation. This formulation was diluted to 1% by weight with a Mueller Hinton Broth (manufactured by Nippon Becton Dickinson Co., Ltd.), and a 2 mL aliquot thereof was measured off into a 24-well microplate (manufactured by Asahi Techno Glass Corp.).

*Pseudomonas aeruginosa* NBRC13275, *Serratia marcescens* NBRC12648, and *Klebsiella pneumoniae* ATCC13883. were separately precultured at 37°C for 24 hours with a Soybean-Casein Digest Agar (SCD agar medium; manufactured by Nihon Pharmaceutical Co., Ltd.) to form colonies, from which very small amounts of masses of the bacteria were separately inoculated into the test solution in the microplate by use of a sterilized bamboo skewer. After culture thereof at 37°C for 48 hours, the culture solution was discarded. The states of formation of biofilms adhering to the walls of the microplate were visually observed. The states of the biofilms were evaluated as A for a state in which 0 to 20% of the plate wall surface was covered with the biofilm, as B for a state in which 20 to 40% thereof was covered with the biofilm, as C for a state in which 40 to 60% thereof was covered with the biofilm, and as D for a state in which 60% or more thereof was covered with the biofilm. The results are shown in Tables 1-1 to 1-6.

**[Table 1-1]**

| | | Example product | | | | | | | | | | | | | | | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 |
| Component (A) R¹O-(EO)p-H | A-1 | 1.0 | 1.0 | 1.0 | | | | | | | | | | | | | | | |
| | A-2 | | | | 1.0 | 1.0 | 1.0 | 1.0 | 1.0 | 1.0 | 1.0 | | | | | | | | |
| | A-3 | | | | | | | | | | | 1.0 | 1.0 | 1.0 | 1.0 | 1.0 | 1.0 | 1.0 | |
| | A-4 | | | | | | | | | | | | | | | | | | 1.0 |
| | A-5 | | | | | | | | | | | | | | | | | | |
| | A-6 | | | | | | | | | | | | | | | | | | |
| | A-7 | | | | | | | | | | | | | | | | | | |
| | A-8 | | | | | | | | | | | | | | | | | | |
| | A-9 | | | | | | | | | | | | | | | | | | |
| | A-10 | | | | | | | | | | | | | | | | | | |
| | A-11 | | | | | | | | | | | | | | | | | | |
| Component(A') R^{1'}O-(EO)p-H | A'-1 | | | | | | | | | | | | | | | | | | |
| | A'-2 | | | | | | | | | | | | | | | | | | |
| | A'-3 | | | | | | | | | | | | | | | | | | |
| | A'-4 | | | | | | | | | | | | | | | | | | |
| | A'-5 | | | | | | | | | | | | | | | | | | |
| | A'-6 | | | | | | | | | | | | | | | | | | |
| | A'-7 | | | | | | | | | | | | | | | | | | |
| | A'-8 | | | | | | | | | | | | | | | | | | |
| | A'-9 | | | | | | | | | | | | | | | | | | |
| | A'-10 | | | | | | | | | | | | | | | | | | |
| | A'-11 | | | | | | | | | | | | | | | | | | |
| | A'-12 | | | | | | | | | | | | | | | | | | |
| | A'-13 | | | | | | | | | | | | | | | | | | |
| Component (B) Enzyme | B-1 | 1.0 | | | 1.0 | | | | | | | | | | | | | 1.0 | |
| | B-2 | | 1.0 | | | 1.0 | | | | | | 1.0 | 1.0 | | | | | | 1.0 |
| | B-3 | | | 1.0 | | | 1.0 | | | | | | | 1.0 | 1.0 | | | | |
| | B-4 | | | | | | | 1.0 | | | | | | | | 1.0 | 1.0 | | |
| | B-5 | | | | | | | | 1.0 | | | | | | | | | | |
| | B-6 | | | | | | | | | 1.0 | 1.0 | | | | | | | | |
| Component (C) Surfactant | C-1 | 1.0 | | | | | | | | | | 1.0 | 10.0 | | | | | | |
| | C-2 | | 3.0 | | | | | | | | | | | 1.0 | 10.0 | | | | 3.0 |
| | C-3 | | | 6.0 | 1.0 | 3.0 | 6.0 | 10.0 | | | | | | | | 1.0 | 10.0 | | |
| | C-4 | | | | | | | | 1.0 | 3.0 | 10.0 | | | | | | | | |
| | C-5 | | | | | | | | | | | | | | | | | | |
| | C-6 | | | | | | | | | | | | | | | | | 6.0 | |
| **Ion-exchanged water** | | Balance | Balance | Balance | Balance | Balance | Balance | Balance | Balance | Balance | Balance | Balance | Balance | Balance | Balance | Balance | Balance | Balance | Balance |
| **Total** | | 100.0 | 100.0 | 100.0 | 100:0 | 100.0 | 100.0 | 100.0 | 100.0 | 100.0 | 100.0 | 100.0 | 100.0 | 100.0 | 100.0 | 100.0 | 100.0 | 100.0 | 100.0 |
| State of suppression of biofilm | *P. aeruginosa* | B | B | B | A | A | A | A | A | A | A | A | A | A | A | A | A | A | B |
| | *S. marcescens* | B | B | B | A | A | A | A | A | A | A | A | A | A | A | A | A | A | B |
| | *K. pneumoniae* | B | B | B | A | A | A | A | A | A | A | A | A | A | A | A | A | A | B |
| State of removal of | *P. aeruginosa* | B | B | B | A | A | A | A | A | A | A | A | A | A | A | A | A | B | B |
| | S. *marcescens* | B | B | B | A | A | A | B | A | A | B | B | A | B | B | A | A | B | B |
| | *K. pneumoniae* | B | B | B | A | A | A | A | A | A | A | A | A | A | A | A | A | B | B |

**[Table 1-2]**

| | | Example product | | | | | | | | | | | | | | | |
|---|---|---|---|---|---|---|---|---|---|---|---|---|---|---|---|---|---|
| | | 19 | 20 | 11 | 22 | 23 | 14 | 25 | 26 | 27 | 28 | 29 | 31 | 33 | 34 | 35 | 36 |
| Component (A) R¹O-(EO)p-H | A-1 | | | | | | | | | | | | | | | | |
| | A-2 | | | | | | | | | | | | | | | | |
| | A3 | | | | | | | | | | | | | | | | |
| | A-4 | 1.0 | 1.0 | | | | | | | | | | | | | | |
| | A-5 | | | 1.0 | 1.0 | 1.0 | 1.0 | | | | | | | | | | |
| | A-6 | | | | | | | 1.0 | 1.0 | 1.0 | 1.0 | | | | | | |
| | A-7 | | | | | | | | | | | 1.0 | 1.0 | | | | |
| | A-8 | | | | | | | | | | | | | 1.0 | 1.0 | 1.0 | 1.0 |
| | A-9 | | | | | | | | | | | | | | | | |
| | A-10 | | | | | | | | | | | | | | | | |
| | A-11 | | | | | | | | | | | | | | | | |
| Component (A') R^{1'}O-(EO)p-H | A'-1 | | | | | | | | | | | | | | | | |
| | A'-2 | | | | | | | | | | | | | | | | |
| | A'-3 | | | | | | | | | | | | | | | | |
| | A'-4 | | | | | | | | | | | | | | | | |
| | A'-5 | | | | | | | | | | | | | | | | |
| | A'-6 | | | | | | | | | | | | | | | | |
| | A'-7 | | | | | | | | | | | | | | | | |
| | A'-8 | | | | | | | | | | | | | | | | |
| | A'-9 | | | | | | | | | | | | | | | | |
| | A'-10 | | | | | | | | | | | | | | | | |
| | A'-11 | | | | | | | | | | | | | | | | |
| | A'-12 | | | | | | | | | | | | | | | | |
| | A'-13 | | | | | | | | | | | | | | | | |
| Component (B) Enzyme | B-1 | | | | | | | | | | | 1.0 | | | | | |
| | B-2 | | | | | | | | | | | | 1.0 | | | | |
| | B-3 | 1.0 | | 1.0 | | 1.0 | 1.0 | | | | | | | | | | |
| | B-4 | | 1.0 | | 1.0 | | | | | | | | | | | | |
| | B-5 | | | | | | | | | | | | | 1.0 | 1.0 | 1.0 | 1.0 |
| | B-6 | | | | | | | 1.0 | 1.0 | 1.0 | 1.0 | | | | | | |
| Component (C) Surfactant | C-1 | | | | | | | | | | | | | | | | |
| | C-2 | | | | | | | 3.0 | | | | | | 3.0 | | | |
| | C-3 | 3.0 | | | | | | | | | 3.0 | 6.0 | 6.0 | | 3.0 | | |
| | C-4 | | | | | | | | | | | | | | | | |
| | C-5 | | 3.0 | | | | | | | | | | | | | 10.0 | |
| | C-6 | | | | | 3.0 | 6.0 | | 3.0 | 3.0 | | | | | | | 3.0 |
| Ion-exchanged water | | Balance | Balance | Balance | Balance | Balance | Balance | Balance | Balance | Balance | Balance | Balance | Balance | Balance | Balance | Balance | Balance |
| Total | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| State of suppression of biofilm | *P. aeruginosa* | B | B | B | B | A | A | A | A | A | A | A | B | B | B | B | B |
| | *S*. *marcescens* | B | B | B | B | A | A | A | A | A | A | A | A | B | B | B | B |
| | *K. pneumoniae* | B | B | B | B | A | A | A | A | A | A | A | B | B | B | B | B |
| State of removal of biofilm | *P. aeruginosa* | B | B | B | B | B | B | A | B | A | A | A | A | B | B | B | B |
| | *S. marcescens* | B | B | B | B | A | A | A | A | A | A | A | A | B | B | B | B |
| | *K. pneumoniae* | B | B | B | B | A | A | A | A | A | A | A | A | B | B | B | B |

**[Table 1-3]**

| | | Example product | | | | | | | | | | | |
|---|---|---|---|---|---|---|---|---|---|---|---|---|---|
| | | 37 | 38 | 39 | 40 | 41 | 42 | 43 | 44 | 45 | 46 | 47 | 48 |
| Component (A) R¹O-(EO)p-H | A-1 | | | | | | | | | | | | |
| | A-2 | | | | | | | | | | | | |
| | A-3 | | | | | | | | | | | | |
| | A-4 | | | | | | | | | | | | |
| | A-5 | | | | | | | | | | | | |
| | A-6 | | | | | | | | | | | | |
| | A-7 | | | | | | | | | | | | |
| | A-8 | | | | | | | | | | | | |
| | A-9 | 1.0 | 1.0 | 1.0 | 1.0 | | | | | | | | |
| | A-10 | | | | | 1.0 | 1.0 | 1.0 | 1.0 | | | | |
| | A-11 | | | | | | | | | 1.0 | 1.0 | 1.0 | 1.0 |
| Component (A') R^{1'}O-(EO)p-H | A'-1 | | | | | | | | | | | | |
| | A'-2 | | | | | | | | | | | | |
| | A'-3 | | | | | | | | | | | | |
| | A'-4 | | | | | | | | | | | | |
| | A'-5 | | | | | | | | | | | | |
| | A'-6 | | | | | | | | | | | | |
| | A'-7 | | | | | | | | | | | | |
| | A'-8 | | | | | | | | | | | | |
| | A'-9 | | | | | | | | | | | | |
| | A'-10 | | | | | | | | | | | | |
| | A'-11 | | | | | | | | | | | | |
| | A'-12 | | | | | | | | | | | | |
| | A'-13 | | | | | | | | | | | | |
| Component (B) Enzyme | B-1 | 1.0 | | | | | | | | 1.0 | | 1.0 | |
| | B-2 | | | 1.0 | | | | 1.0 | | | | | 1.0 |
| | B-3 | | 1.0 | | 1 .0 | | | | | | | | |
| | B-4 | | | | | 1.0 | 1.0 | | | | | | |
| | B-5 | | | | | | | | 1.0 | | | | |
| | B-6 | | | | | | | | | | 1.0 | | |
| Component (C) Surfactant | C-1 | | 6.0 | | | | | | | 10.0 | | | |
| | C-2 | 10.0 | | | | | | | | | 6.0 | | |
| | C-3 | | | 3.0 | | | | | 3.0 | | | 6.0 | |
| | C-4 | | | | 3.0 | | | 6.0 | | | | | 6.0 |
| | C-5 | | | | | 10.0 | | | | | | | |
| | C-6 | | | | | | 6.0 | | | | | | |
| Ion-exchanged water | | remaining | remaining | remaining | remaining | remaining | remaining | remaining | remaining | rem aining | remaining | remaining | remaining |
| Total | | 100.0 | 100.0 | 100.0 | 100.0 | 100.0 | 100.0 | 100.0 | 100.0 | 100.0 | 100.0 | 100.0 | 100.0 |
| State of suppression of biofilm | *P. aeruginosa* | B | A | A | A | A | A | A | B | B | A | A | A |
| | *S. marcescens* | A | A | A | A | A | A | A | A | A | A | A | A |
| | *K. pneumoniae* | A | A | A | A | A | A | A | A | A | A | A | A |
| State of removal of biofilm | *P. aeruginosa* | B | A | A | A | B | B | A | B | B | B | A | A |
| | *S. marcescens* | A | A | A | A | A | A | A | A | A | A | A | A |
| | *K. pneumoniae* | A | A | A | A | A | A | A | A | B | B | A | A |

**[Table 1-4]**

| | | Comparative product | | | | | | | | | | | | | | | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 |
| Component (A) R¹O-(EO)p-H | A-1 | | | | | | | | | | | | | | | | | | |
| | A-2 | | | | | | | | | | | | | | | | | | |
| | A-3 | | | | | | | | | | | | | | | | | | |
| | A-4 | | | | | | | | | | | | | | | | | | |
| | A-5 | | | | | | | | | | | | | | | | | | |
| | A-6 | | | | | | | | | | | | | | | | | | |
| | A-7 | | | | | | | | | | | | | | | | | | |
| | A-8 | | | | | | | | | | | | | | | | | | |
| | A-9 | | | | | | | | | | | | | | | | | | |
| | A-10 | | | | | | | | | | | | | | | | | | |
| | A-11 | | | | | | | | | | | | | | | | | | |
| Component (A') R^{1'}O-(EO)p-H | A'-1 | 1.0 | 1.0 | | | | | | | | | | | | | | | | |
| | A'-2 | | | 1.0 | 1.0 | 1.0 | | | | | | | | | | | | | |
| | A'3 | | | | | | 1.0 | 1.0 | 1.0 | | | | | | | | | | |
| | A'-4 | | | | | | | | | 1.0 | 1.0 | | | | | | | | |
| | A'-5 | | | | | | | | | | | 1.0 | 1.0 | | | | | | |
| | A'-6 | | | | | | | | | | | | | 1.0 | 1.0 | | | | |
| | A'-7 | | | | | | | | | | | | | | | 1.0 | 1.0 | | |
| | A'-8 | | | | | | | | | | | | | | | | | 1.0 | 1.0 |
| | A'-9 | | | | | | | | | | | | | | | | | | |
| | A'-10 | | | | | | | | | | | | | | | | | | |
| | A'-11 | | | | | | | | | | | | | | | | | | |
| | A'-12 | | | | | | | | | | | | | | | | | | |
| Component (B) Enzyme | A'-13 | | | | | | | | | | | | | | | | | | |
| | B-1 | 1.0 | | | 1.0 | | | | | | | | | | | | | 1.0 | |
| | B-2 | | 1.0 | | | 1.0 | | | | | | 1.0 | 1.0 | | | | | | 1.0 |
| | B-3 | | | 1.0 | | | 1.0 | | | | | | | 1.0 | 1.0 | | | | |
| | B-4 | | | | | | | 1.0 | | | | | | | | 1.0 | 1.0 | | |
| | B-5 | | | | | | | | 1.0 | | | | | | | | | | |
| | B-6 | | | | | | | | | 1.0 | 1.0 | | | | | | | | |
| Component (C) Surfactant | C-1 | 1.0 | | | | | | | | | | 1.0 | 10.0 | | | | | | |
| | C-2 | | 3.0 | | | | | | | | | | | 1.0 | 10.0 | | | | 3.0 |
| | C-3 | | | 6.0 | 1.0 | 3.0 | 6.0 | 10.0 | | | | | | | | 1.0 | 10.0 | | |
| | C-4 | | | | | | | | 1.0 | 3.0 | 10.0 | | | | | | | | |
| | C-5 | | | | | | | | | | | | | | | | | | |
| | C-6 | | | | | | | | | | | | | | | | | 6.0 | |
| Ion-exchanged water | | Balance | Balance | Balance | Balance | Balance | Balance | Balance | Balance | Balance | Balance | Balance | Balance | Balance | Balance | Balance | Balance | Balance | Balance |
| Total | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| State of suppression of biofilm | *P. aeruginosa* | D | D | D | D | D | D | D | D | D | D | C | C | D | D | D | D | D | D |
| | *S. marcescens* | D | D | D | D | D | D | D | D | D | D | C | C | D | D | D | D | D | D |
| | *K. pneumoniae* | D | D | D | D | D | D | D | D | D | D | C | C | D | D | D | D | D | D |
| State of removal of biofilm | *P. aeruginosa* | C | D | D | D | D | D | C | D | D | D | C | C | D | D | D | D | C | C |
| | *S. marcescens* | B | B | B | B | B | B | B | C | C | B | C | C | D | D | D | D | B | C |
| | *K. pneumoniae* | B | C | B | C | C | C | D | D | D | D | C | C | D | D | D | D | B | C |

**[Table 1-5]**

| | | Comparative Product | | | | | | | | | | | | | | | | | |
|---|---|---|---|---|---|---|---|---|---|---|---|---|---|---|---|---|---|---|---|
| | | 19 | 20 | 21 | 22 | 23 | 24 | 25 | 26 | 27 | 28 | 29 | 30 | 31 | 32 | 33 | 34 | 35 | 36 |
| Component (A) R¹O-(EO)ₚ-H | A-1 | | | | | | | | | | | | | | | | | | |
| | A-2 | | | | | | | | | 1.0 | 1.0 | | | | | | | | |
| | A-3 | | | | | | | | | | | 1.0 | 1.0 | | | | | | |
| | A-4 | | | | | | | | | | | | | | | | | | |
| | A-5 | | | | | | | | | | | | | 1.0 | | | | | |
| | A-6 | | | | | | | | | | | | | | | | | | |
| | A-7 | | | | | | | | | | | | | | | | | | |
| | A-8 | | | | | | | | | | | | | | 1.0 | | | | |
| | A-9 | | | | | | | | | | | | | | | | | | |
| | A-10 | | | | | | | | | | | | | | | | | | |
| | A-11 | | | | | | | | | | | | | | | | | | |
| Component (A') R^{1'}O-(EO)ₚ-H | A'-1 | | | | | | | | | | | | | | | | | | |
| | A'-2 | | | | | | | | | | | | | | | | | | |
| | A'-3 | | | | | | | | | | | | | | | | | | |
| | A'-4 | | | | | | | | | | | | | | | | | | |
| | A'-5 | | | | | | | | | | | | | | | | | | |
| | A'-6 | | | | | | | | | | | | | | | | | | |
| | A'-7 | | | | | | | | | | | | | | | | | | |
| | A'-8 | | | | | | | | | | | | | | | | | | |
| | A'-9 | 1.0 | 1.0 | | | | | | | | | | | | | | | | |
| | A'-10 | | | 1.0 | 1.0 | | | | | | | | | | | | | | |
| | A'-11 | | | | | 1.0 | 1.0 | | | | | | | | | | | | |
| | A'-12 | | | | | | | 1.0 | 1.0 | | | | | | | | | | |
| | A'-13 | | | | | | | | | | | | | | | | | | |
| Component (B) Enzyme | B-1 | | | | | | | | | | | | | | | 1.0 | | | |
| | B-2 | | | | | | | | | | | | | | | | 1.0 | | |
| | B-3 | 1.0 | | 1.0 | 1.0 | 1.0 | 1.0 | | | | | | | | | | | 1.0 | |
| | B-4 | | 1.0 | | | | | | | | | | | | | | | | 1.0 |
| | B-5 | | | | | | | | | | | | | | | | | | |
| | B-6 | | | | | | | 1.0 | 1.0 | | | | | | | | | | |
| Component (C) Surfactant | C-1 | | | 3.0 | | | | | | | | | | 3.0 | | 3.0 | | | |
| | C-2 | | | | | | | 3.0 | | | | | | | | | 6.0 | | |
| | C-3 | 3.0 | | | | | | | | 3.0 | 6.0 | 1.0 | 10.0 | | | | | 10.0 | |
| | C-4 | | | | | | | | | | | | | | | | | | |
| | C-5 | | 3.0 | | 3.0 | | | | | | | | | | | | | | 6.0 |
| | C-6 | | | | | 3.0 | 6.0 | | 3.0 | | | | | | 3.0 | | | | |
| Ion-exchanged water | | Balance | Balance | Balance | Balance | Balance | Balance | Balance | Balance | Balance | Balance | Balance | Balance | Balance | Balance | Balance | Balance | Balance | Balance |
| Total | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| State of suppression of biofilm | *P. aeruginosa* | D | D | D | D | D | D | D | D | B | B | B | B | B | B | D | D | D | D |
| | *S. marcescens* | D | D | D | D | D | D | D | D | B | B | B | B | B | B | D | D | D | D |
| | *K. pneumoniae* | D | D | D | D | D | D | D | D | B | B | B | B | B | B | D | D | D | D |
| State of removal of biofilm | *P. aeruginosa* | C | D | C | C | C | D | D | D | D | D | D | D | D | D | D | C | D | C |
| | *S. marcescens* | B | B | B | B | D | B | D | D | D | D | D | D | D | D | C | C | C | D |
| | *K. pneumoniae* | B | C | B | B | B | C | D | D | D | D | D | D | D | D | D | C | D | D |

**[Table 1-6]**

| | | Comparative product | | | | | | | | | | | | | |
|---|---|---|---|---|---|---|---|---|---|---|---|---|---|---|---|
| | | 37 | 38 | 39 | 40 | 41 | 42 | 43 | 44 | 45 | 46 | 47 | 48 | 49 | 50 |
| Component (A) R¹O-(EO)ₚ-H | A-1 | | | | | | | | | | | | | | |
| | A-2 | | | | | | | | | | | | | | |
| | A-3 | | | | | | | | | | | | | | |
| | A-4 | | | | | | | | | | | | | | |
| | A-5 | | | | | | | | | | | | | | |
| | A-6 | | | | | | | | | | | | | | |
| | A-7 | | | | | | | | | | | | | | |
| | A-8 | | | | | | | | | | | | | | |
| | A-9 | | | | | | | | | | | | | | |
| | A-10 | | | | | | | | | 1.0 | | | | | |
| | A-11 | | | | | | | | | | 1.0 | | | | |
| Component (A') R¹O-(EO)ₚ-H | A'-1 | | | | | | | | | | | | | | |
| | A'-2 | | | | | | | | | | | | | | |
| | A'-3 | | | | | | | | | | | | | | |
| | A'-4 | | | | | | | | | | | | | | |
| | A'-5 | | | | | | | | | | | | | | |
| | A'-8 | 1.0 | 1.0 | | | | | | | | | | | | |
| | A'-7 | | | 1.0 | 1.0 | | | | | | | | | | |
| | A'-8 | | | | | 1.0 | 1.0 | | | | | | | | |
| | A'-9 | | | | | | | | | | | | | | |
| | A'-10 | | | | | | | | | | | | | | |
| | A'-11 | | | | | | | | | | | | | | |
| | A'-12 | | | | | | | | | | | | | | |
| | A'-13 | | | | | | | 1.0 | 1.0 | | | | | | |
| | A'-14 | | | | | | | | | | | 1.0 | 1.0 | | |
| | A'-15 | | | | | | | | | | | | | 1.0 | 1.0 |
| Component (B) Enzyme | B-1 | | | | | | | 1.0 | | | | 1.0 | | | |
| | B-2 | | | | | | | | 1.0 | | | | 1.0 | | |
| | B-3 | | | | | | | | | | | | | 1.0 | |
| | B-4 | | | | | | | | | | | | | | 1.0 |
| | B-5 | | | | | | | | | | | | | | |
| | B-6 | | | | | | | | | | | | | | |
| Component (C) Surfactant | C-1 | 6.0 | | | | | | | | | | | | | |
| | C-2 | | 6.0 | | | | | 10.0 | | | | 3.0 | | 3.0 | |
| | C-3 | | | 6.0 | | | | | 3.0 | | | | 6.0 | | 6.0 |
| | C-4 | | | | 6.0 | | | | | 6.0 | | | | | |
| | C-5 | | | | | 6.0 | | | | | 10.0 | | | | |
| | C-6 | | | | | | 6.0 | | | | | | | | |
| Ion-exchanged water | | remaining | remaining | remaining | remaining | remaining | remaining | remaining | ramaining | remaining | remaining | remdning | remaining | remaining | remaining |
| Total | | 100.0 | 100.0 | 100.0 | 100.0 | 100.0 | 100.0 | 100.0 | 100.0 | 100.0 | 100.0 | 100.0 | 100.0 | 100.0 | 100.0 |
| State of suppression of biofilm | *P. aeruginosa* | D | D | D | D | D | D | D | D | B | B | D | D | D | D |
| | *S. marcescens* | D | D | D | D | D | D | D | D | B | B | D | D | D | D |
| | *K. pneumoniae* | D | D | D | D | D | D | D | D | B | B | D | D | D | D |
| State of removal of biofilm | *P. aeruginosa* | D | D | D | D | D | D | D | D | D | D | C | C | D | D |
| | *S. marcescens* | D | D | D | D | D | D | C | C | D | D | C | C | C | C |
| | *K. pneumoniae* | D | D | D | D | D | D | C | D | D | D | C | C | C | C |

It could be confirmed that use of the products of the present invention can significantly suppress biofilm formation. Moreover, those using both the enzyme and the surfactant (represented by the general formula (1) wherein p represents 6 or 9 on average) (comparative products 47 to 50) had no effect.

### Example 2: Formulation of composition of biofilm control agent and test for ability to remove biofilm

A component (A) or (A') concentration was fixed to 1% by weight (active content). A component (B) concentration was set to 1% by weight (apparent). A component (C) concentration was selected from 1, 3, 6, and 10% by weight (active content). The remaining part was formulated with ion-exchanged water to prepare a formulated composition. This formulated composition was diluted to 1% by weight with ion-exchanged water to prepare a biofilm control agent.

*Pseudomonas aeruginosa* NBRC13275, *Serratia marcescens* NBRC12648, and *Klebsiella pneumoniae* ATCC13883 were separately precultured at 37°C for 24 hours with a Soybean-Casein Digest Agar (SCD agar medium; manufactured by Nihon Pharmaceutical Co., Ltd.) to form colonies, from which very small amounts of masses of the bacteria were separately inoculated by use of a sterilized bamboo skewer into a microplate to which 2 mL/well of a Mueller Hinton Broth was poured. After culture thereof at 37°C for 48 hours, the culture solution was discarded. Biofilms were thereby allowed to form and adhere on the walls of the microplate. Immediately thereafter, 2 mL of the prepared biofilm control agent was poured to the microplate and allowed to act thereon at 40°C for 20 minutes. Then, the biofilm control agent was discarded. The remaining states of the biofilms on the microplate walls were visually observed. The remaining states of the biofilms were evaluated as A for a state in which 0 to 20% of the plate wall surface was covered with the biofilm, as B for a state in which 20 to 40% thereof was covered with the biofilm, as C for a state in which 40 to 60% thereof was covered with the biofilm, and as D for a state in which 60% or more thereof was covered with the biofilm. The results are shown in Tables 1-1 to 1-6.

It could be confirmed that use of the products of the present invention can easily remove biofilms. The comparative products formulated with the enzyme were observed to have effects to some extent, but not perfect. Moreover, those using both the enzyme and the surfactant (represented by the general formula (1) wherein p represents 6 or 9) (comparative products 47 to 50) had insufficient effects.

### Example 3: Biofilm control test with silicon tube

*Pseudomonas aeruginosa* NBRC13275 and *Klebsiella pneumoniae* ATCC13883 were separately precultured at 37°C for 24 hours with a Soybean-Casein Digest Agar (SCD agar medium; manufactured by Nihon Pharmaceutical Co., Ltd.). A loop of a colony of each bacterium on the agar medium was inoculated into 1 L Mueller Hinton Broth (Becton Dickinson). The culture solution containing the bacterium suspended therein was circulated at 30°C for 48 hours at a flow rate of 50 to 60 mL/min. in a silicon tube (5 mm in internal diameter and 7 mm in external diameter) manufactured by Aram Corp. by use of a Masterflex quantification pump system (system model No. 7553-80, head No. 7016-21) manufactured by Cole-Parmer Instrument Company. Biofilms were thereby allowed to form on the surface within the silicon tube. The culture solution was discarded. Concentrations of the example products 6, 12, and 38 and the comparative products 3, 21, 28, 34, and 38, in Example 1 were separately adjusted with ion-exchanged water to 0.25 or 1% by weight, and further, a Mueller Hinton Broth concentration was adjusted with ion-exchanged water to 10% by weight. The solution of 10% by weight of the Mueller Hinton Broth (unsupplemented with the formulations) was tested as a control in the same way.

The test solutions were separately circulated at 30°C at a flow rate of 50 to 60 mL/min. After 0 (before treatment), 5, 12, 24, and 48 hours, biofilm formation within the silicon tube was visually observed. The state of biofilm formation was evaluated as A for no formation, as B for the slight coloring of the surface within the silicon tube after the initiation of biofilm formation, and as C for obvious biofilm formation.

The results are shown in Tables 2-1 to 2-2.

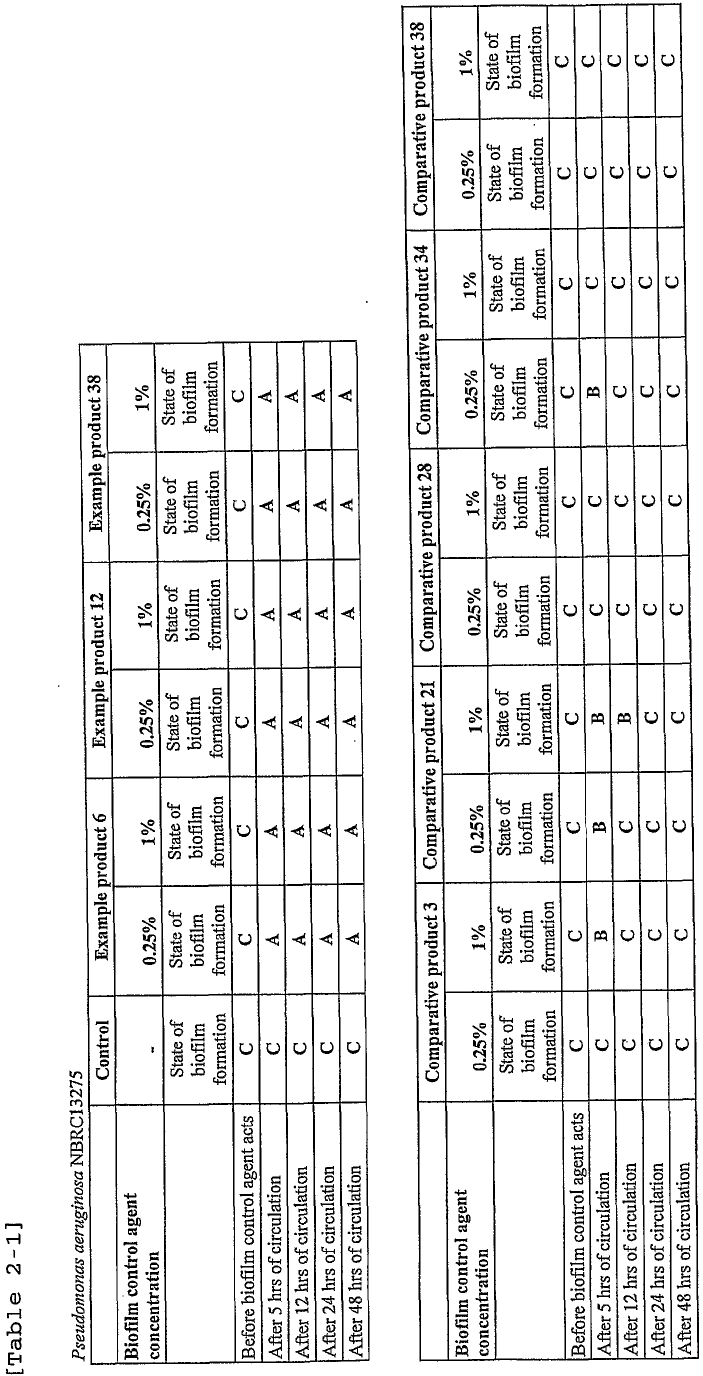

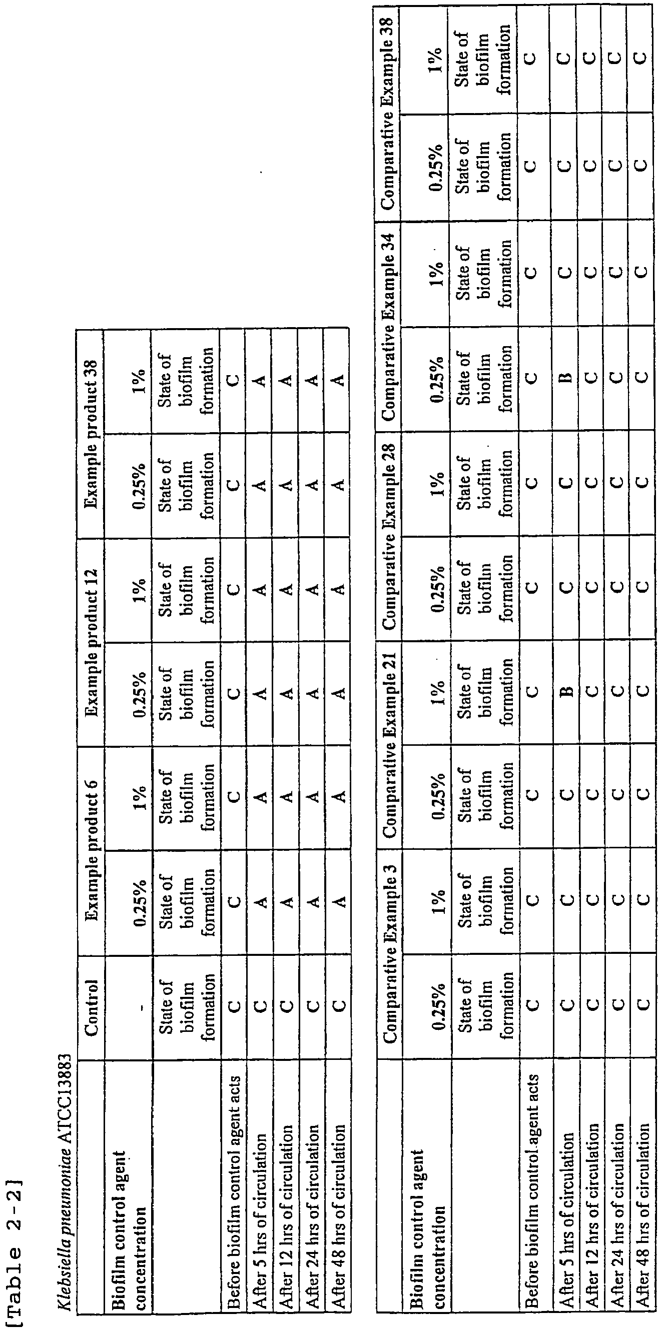

It could be confirmed that the products used in the present invention have excellent ability to control a biofilm because the use of the products of the present invention effectively remove a biofilm adhering to the surface within the silicon tube and have no new biofilm formation observed, and that this removal is not attributed to the cleaning effect of the surfactant because the comparative products using only the surfactant had no effect. Thus, it shows that the simultaneous and effective working of the effect of suppressing biofilm formation and the effect of removing a biofilm is important for biofilm control. On the other hand, the comparative products formulated with the enzyme (comparative products 3, 21, and 34) transiently exhibited slight effects, however, new biofilms were formed immediately.

### Example 4: Biofilm control test of composition of biofilm control agent stored at 40°C for 1 month

Biofilm compositions shown in Table 3-1 below were formulated and tested in the same way as in Example 3 using *Pseudomonas aeruginosa* NBRC13275. The results are shown in Table 3-1.

**[Table 3-1]**

| | | Example product 66 | Example product 67 | Example product 68 | Example product 69 | Example product 70 | Example product 71 | Example product 72 | Example product 73 | Example product 74 |
|---|---|---|---|---|---|---|---|---|---|---|
| Component (A) | (A-1) | 1.0 | 1.0 | 1.0 | | 1.0 | | 1.0 | | |
| | (A-2) | | | | 1.0 | | 1.0 | | 1.0 | |
| | (A-11) | | | | | | | | | 1.0 |
| Component (B) | (B-3) | 1.0 | | | | | | 1.0 | 1.0 | 1.0 |
| | (B-4) | | 1.0 | 1.0 | 1.0 | 1.0 | 1.0 | | | |
| Component (C) | (C-2) | 10.0 | 10.0 | | 10.0 | | | 10.0 | 10.0 | 10.0 |
| | (C-3) | | | 10.0 | | 10.0 | 10.0 | | | |
| Component (D) | Sodium Borate | | | 2.0 | | | | 1.0 | | |
| | Propylene glycol | | | | 10.0 | | | 5.0 | 5.0 | 40.0 |
| | Sodium Formate | | | | | 2.0 | | | | |
| | Calcium chloride | | | | | | 1.0 | | 0.5 | 0.5 |
| Ion-exchanged water | | Balance | Balance | Balance | Balance | Balance | Balance | Balance | Balance | Balance |
| Test result immediately after formulation | Biofilm control agent concentration | 1% | 1% | 1% | 1% | 1% | 1% | 1% | 1% | 1% |
| | *Pseudomonas aeruginosa* NBRC13275 | State of biofilm formation | State of biofilm formation | State of biofilm formation | State of biofilm formation | State of biofilm formation | State of biofilm formation | State of biofilm formation | State of biofilm formation | State of biofilm formation |
| | Before biofilm control agent acts | C | C | C | C | C | C | C | C | C |
| | After 5 hrs of circulation | A | A | A | A | A | A | A | A | A |
| | After 12 hrs of circulation | A | A | A | A | A | A | A | A | A |
| | After 24 hrs of circulation | A | A | A | A | A | A | A | A | A |
| | After 48 hrs of circulation | A | A | A | A | A | A | A | A | A |
| Test result after 1-month storage at 40°C | Biofilm control agent concentration | 1% | 1% | 1% | 1% | 1% | 1% | 1% | 1% | 1% |
| | *Pseudomonas aeruginosa* NBRC13275 | State of biofilm formation | State of biofilm formation | Slate of biofilm formation | State of biofilm formation | State of biofilm formation | State of biofilm formation | State of biofilm formation | State of biofilm formation | State of biofilm formation |
| | Before biofilm control agent acts | C | C | C | C | C | C | C | C | C |
| | After 5 hrs of circulation | C | B | A | A | A | A | A | A | A |
| | After 12 hrs of circulation | B | B | A | A | A | A | A | A | A |
| | After 24 hrs of circulation | B | B | A | A | A | A | A | A | A |
| | After 48 hrs of circulation | B | B | A | A | A | A | A | A | A |

The compositions of a biofilm control agent formulated with the enzyme stabilizer (products for use in the present invention 66 to 74) were observed to have effects after storage at 40°C for 1 month similar to those immediately after formulation.

## Claims

1. Use of a composition as a biofilm control agent, the composition comprising the following component (A) and component (B):
(A) one or more compounds represented by the general formula (1):
[F1]
R¹O-(EO)ₚ-H (1)
wherein R¹ represents a linear or branched alkyl group or alkenyl group having 8 to 14 carbon atoms; represents an ethyleneoxy group; p represents an integer of 0 to 3 and
(B) one or more enzymes selected from the group consisting of hydrase and lyase.

2. The use according to claim 1, further comprising (C) a surfactant other than the component (A).

3. The use according to claim 1 or 2, wherein the surfactant (C) is one or more selected from the group consisting of anionic surfactants and nonionic surfactants other than the component (A).

4. The use according to any one of claims 1 to 3, further comprising (D) an enzyme stabilizer.

5. The use according to claim 4, wherein the enzyme stabilizer (D) is one or more selected from the group consisting of boric acid or salts thereof, polyol, formic acid or salts thereof, and water-soluble calcium-containing compounds.

6. A method for suppressing biofilm formation by bringing a composition as defined in any one of claims 1 to 5 into contact with a microorganism and removing an already-formed biofilm.

## Patentansprüche

1. Verwendung einer Zusammensetzung als Biofilmbekämpfungsmittel, wobei die Zusammensetzung die folgende Komponente (A) und Komponente (B) umfasst:
(A) eine oder mehrere durch die allgemeine Formel (1) dargestellte Verbindungen:
[F1]
R¹O-(EO)ₚ-H (1)
worin R¹ eine geradkettige oder verzweigte Alkylgruppe oder Alkenylgruppe mit 8 bis 14 Kohlenstoffatomen darstellt, EO eine Ethylenoxygruppe darstellt, p eine ganze Zahl von 0 bis 3 darstellt und
(B) ein oder mehrere Enzyme ausgewählt aus der Gruppe bestehend aus Hydrase und Lyase.

2. Verwendung gemäß Anspruch 1, ferner umfassend (C) ein Tensid, das von der Komponente (A) verschieden ist.

3. Verwendung gemäß Anspruch 1 oder 2, wobei das Tensid (C) ein oder mehrere ausgewählt aus der Gruppe bestehend aus anionischen Tensiden und nicht-ionischen Tensiden, die von der Komponente (A) verschieden sind, ist.

4. Verwendung gemäß irgendeinem der Ansprüche 1 bis 3, ferner umfassend (D) einen Enzymstabilisator.

5. Verwendung gemäß Anspruch 4, wobei der Enzymstabilisator (D) einer oder mehrere ausgewählt aus der Gruppe bestehend aus Borsäure oder Salzen davon, Polyol, Ameisensäure oder Salzen davon und wasserlöslichen calciumhaltigen Verbindungen ist.

6. Verfahren zur Unterdrückung der Bildung eines Biofilms durch In-Kontakt-Bringen einer wie in irgendeinem der Ansprüche 1 bis 5 definierten Zusammensetzung mit einem Mikroorganismus und Entfernung eines bereits gebildeten Biofilms.

## Revendications

1. Utilisation d'une composition comme agent de lutte contre un biofilm, la composition comprenant le constituant (A) et le constituant (B) suivants :
(A) un ou plusieurs composés représentés par la formule générale (1) :
[F1]
R¹O-(EO)ₚ-H (1)
dans laquelle R¹ représente un groupe alkyle linéaire ou ramifié ou un groupe alcényle ayant 8 à 14 atomes de carbone ; EO représente un groupe éthylèneoxy ; p représente un nombre entier de 0 à 3 ; et
(B) une ou plusieurs enzymes choisies dans le groupe constitué par une hydrase et une lyase.

2. Utilisation selon la revendication 1, comprenant en outre (C) un tensioactif autre que le constituant (A).

3. Utilisation selon la revendication 1 ou 2, dans laquelle le tensioactif (C) est un ou plusieurs éléments choisis dans le groupe constitué par les tensioactifs anioniques et les tensioactifs non ioniques autres que le constituant (A).

4. Utilisation selon l'une quelconque des revendications 1 à 3, comprenant en outre (D) un stabilisant d'enzyme.

5. Utilisation selon la revendication 4, dans laquelle le stabilisant d'enzyme (D) est un ou plusieurs éléments choisis dans le groupe constitué par l'acide borique ou les sels de celui-ci, un polyol, l'acide formique ou les sels de celui-ci, et des composés contenant du calcium solubles dans l'eau.

6. Procédé pour supprimer la formation d'un biofilm par la mise en contact d'une composition telle que définie selon l'une quelconque des revendications 1 à 5 avec un microorganisme et la suppression d'un biofilm déjà formé.
